(19) Europäisches Patentamt

European Patent Office

Office européen des brevets

(11) **EP 4 672 619 A1**

(12) **EUROPEAN PATENT APPLICATION**

(43) Date of publication:
**31.12.2025 Bulletin 2026/01**

(21) Application number: **24185392.8**

(22) Date of filing: **28.06.2024**

(51) International Patent Classification (IPC):
***H04B 1/10*** *(2006.01)*

(52) Cooperative Patent Classification (CPC):
**H04B 1/1027;** H04B 2001/1045

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Nokia Technologies Oy
02610 Espoo (FI)**

(72) Inventors:
- **BRINK, Stig Blücher
  9220 Aalborg (DK)**
- **NIELSEN, Kim
  9280 Storvorde (DK)**

(74) Representative: **Script Intellectual Property LLP
Suite J, Anchor House
School Close
Chandlers Ford
Eastleigh, Hampshire SO53 4DY (GB)**

(54) **SIGNAL RECEPTION**

(57) Various example embodiments relate to signal reception. In particular, described arrangements relate to an apparatus, method, and computer program product for signal reception. One arrangement provides a method performed by user equipment, the method comprising: determining that the apparatus is to receive signals across a frequency range using a single receiver chain, the frequency range containing at least two non-contiguous frequency blocks containing wanted signals, the at least two non-contiguous frequency blocks being separated by at least one frequency block in which unwanted signals to the apparatus may be transmitted; determining whether a trigger condition for adjusting configuration of an analogue to digital converter in the single receiver chain has been met by: determining whether an indication of received signal strength of at least one frequency block in which unwanted signals may be transmitted has passed a threshold level at which effective decoding of received wanted signals in the non-contiguous frequency blocks is compromised; and adjusting the configuration of the analogue to digital converter in the single receiver chain in response to determining the trigger condition has been met. Further arrangements provide an apparatus and computer program product configured to perform the method. Arrangements generally recognise that it is possible to implement a method for dynamic selection of analogue to digital converter resolution in relation to apparatus which supports single receiver chain non-contiguous carrier aggregation operation.

FIG. 6

EP 4 672 619 A1

**Description**

TECHNOLOGICAL FIELD

Various example embodiments relate to signal reception. In particular, example embodiments relate to an apparatus, method, and computer program product for signal reception.

BACKGROUND

User equipment may be configured to receive signals transmitted by a network node in a wireless communication network. The user equipment may receive unwanted signals. It would be desirable to mitigate the effects of such unwanted signals.

BRIEF SUMMARY

The scope of protection sought for various example embodiments of the invention is set out by the independent claims. The example embodiments and features, if any, described in this specification that do not fall under the scope of the independent claims are to be interpreted as examples useful for understanding various embodiments of the invention.
According to various, but not necessarily all, example embodiments of the invention there is provided an apparatus comprising:

at least one processor; and
at least one memory storing instructions that when executed by the at least one processor cause the apparatus at least to perform:

determining that the apparatus is to receive signals across a frequency range using a single receiver chain, the frequency range containing at least two non-contiguous frequency blocks containing wanted signals, the at least two non-contiguous frequency blocks being separated by at least one frequency block in which unwanted signals to the apparatus may be transmitted;
determining whether a trigger condition for adjusting configuration of an analogue to digital converter in the single receiver chain has been met by: determining whether an indication of received signal strength of at least one frequency block in which unwanted signals may be transmitted has passed a threshold level at which effective decoding of received wanted signals in the non-contiguous frequency blocks is compromised; and adjusting the configuration of the analogue to digital converter in the single receiver chain in response to determining the trigger condition has been met.

According to various, but not necessarily all, example embodiments of the invention there is provided an apparatus comprising:

means for determining that the apparatus is to receive signals across a frequency range using a single receiver chain, the frequency range containing at least two non-contiguous frequency blocks containing wanted signals, the at least two non-contiguous frequency blocks being separated by at least one frequency block in which unwanted signals to the apparatus may be transmitted;
means for determining whether a trigger condition for adjusting configuration of an analogue to digital converter in the single receiver chain has been met by: determining whether an indication of received signal strength of at least one frequency block in which unwanted signals may be transmitted has passed a threshold level at which effective decoding of received wanted signals in the non-contiguous frequency blocks is compromised; and
means for adjusting the configuration of the analogue to digital converter in the single receiver chain in response to determining the trigger condition has been met.

The means may perform the optional features set out in more detail below relation to the apparatus mentioned above.
The processor, memory, and example algorithms, encoded as instructions, program, or code, may be the means for providing or causing the performance of the operation.
According to various, but not necessarily all, example embodiments of the invention there is provided an apparatus comprising:

circuitry configured to determine that the apparatus is to receive signals across a frequency range using a single receiver chain, the frequency range containing at least two non-contiguous frequency blocks containing wanted signals, the at least two non-contiguous frequency blocks being separated by at least one frequency block in which unwanted signals to the apparatus may be transmitted;

circuitry configured to determine whether a trigger condition for adjusting configuration of an analogue to digital converter in the single receiver chain has been met by: determining whether an indication of received signal strength of at least one frequency block in which unwanted signals may be transmitted has passed a threshold level at which effective decoding of received wanted signals in the non-contiguous frequency blocks is compromised; and

circuitry configured to adjust the configuration of the analogue to digital converter in the single receiver chain in response to determining the trigger condition has been met.

The circuitry may be configured perform the optional features set out in relation to the apparatus first mentioned above.

According to some, but not necessarily all, example embodiments of the invention there is provided a method performed by user equipment, the method comprising: determining that the apparatus is to receive signals across a frequency range using a single receiver chain, the frequency range containing at least two non-contiguous frequency blocks containing wanted signals, the at least two non-contiguous frequency blocks being separated by at least one frequency block in which unwanted signals to the apparatus may be transmitted;

determining whether a trigger condition for adjusting configuration of an analogue to digital converter in the single receiver chain has been met by: determining whether an indication of received signal strength of at least one frequency block in which unwanted signals may be transmitted has passed a threshold level at which effective decoding of received wanted signals in the non-contiguous frequency blocks is compromised; and adjusting the configuration of the analogue to digital converter in the single receiver chain in response to determining the trigger condition has been met.

According to some, but not necessarily all, example embodiments of the invention there is provided a computer program comprising instructions which, when executed by an apparatus, cause the apparatus to perform at least the following:

determining that the apparatus is to receive signals across a frequency range using a single receiver chain, the frequency range containing at least two non-contiguous frequency blocks containing wanted signals, the at least two non-contiguous frequency blocks being separated by at least one frequency block in which unwanted signals to the apparatus may be transmitted;

determining whether a trigger condition for adjusting configuration of an analogue to digital converter in the single receiver chain has been met by: determining whether an indication of received signal strength of at least one frequency block in which unwanted signals may be transmitted has passed a threshold level at which effective decoding of received wanted signals in the non-contiguous frequency blocks is compromised; and adjusting the configuration of the analogue to digital converter in the single receiver chain in response to determining the trigger condition has been met.

According to some, but not necessarily all, example embodiments of the invention there is provided a computer program comprising instructions stored thereon for performing at least the following:

determining that the apparatus is to receive signals across a frequency range using a single receiver chain, the frequency range containing at least two non-contiguous frequency blocks containing wanted signals, the at least two non-contiguous frequency blocks being separated by at least one frequency block in which unwanted signals to the apparatus may be transmitted;

determining whether a trigger condition for adjusting configuration of an analogue to digital converter in the single receiver chain has been met by: determining whether an indication of received signal strength of at least one frequency block in which unwanted signals may be transmitted has passed a threshold level at which effective decoding of received wanted signals in the non-contiguous frequency blocks is compromised; and adjusting the configuration of the analogue to digital converter in the single receiver chain in response to determining the trigger condition has been met.

According to some, but not necessarily all, example embodiments of the invention there is provided a non-transitory computer readable medium comprising program instructions stored thereon for performing at least the following:

determining that the apparatus is to receive signals across a frequency range using a single receiver chain, the frequency range containing at least two non-contiguous frequency blocks containing wanted signals, the at least two non-contiguous frequency blocks being separated by at least one frequency block in which unwanted signals to the apparatus may be transmitted;

determining whether a trigger condition for adjusting configuration of an analogue to digital converter in the single receiver chain has been met by: determining whether an indication of received signal strength of at least one frequency block in which unwanted signals may be transmitted has passed a threshold level at which effective decoding of received wanted signals in the non-contiguous frequency blocks is compromised; and adjusting the configuration of the analogue to digital converter in the single receiver chain in response to determining the trigger condition has been met.

The instructions may be for performing the optional features set out in relation to the method mentioned above and described in more detail below.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION

Some example embodiments will now be described with reference to the accompanying drawings in which:

FIG. 1 illustrates graphically Adjacent Channel Selectivity (ACS);
FIG. 2 illustrates schematically a UE architecture which offers full bandwidth support, and in which non-contiguous carrier aggregation is supported by use of two analogue channel filters;
FIG. 3 illustrates schematically a scenario in which two spectrum blocks in a single wide-band cell are used for user equipment supporting 1 receiver non-contiguous carrier aggregation communication;
FIG. 4 illustrates graphically how Automatic Gain Control operates to ensure effective utilization by an Analogue to Digital Converter of available signal to noise and distortion ratio;
FIG. 5 illustrates schematically received signal levels at a UE in a fragmented carrier scenario in which an in-gap interferer is received at a higher power level than the wanted component carriers CC1 and CC2;
FIG. 6 illustrates graphically how a UE configuration in accordance with arrangements can result in an effective increase of an effective number of bits and allow a UE to more successfully extract the wanted signal from all received signals;
FIG. 7 illustrates schematically received signal levels at a UE in a fragmented carrier scenario in which an in-gap interferer is received at a lower power level than the wanted component carriers CC1 and CC2;
FIG. 8 shows schematically a 4x4 MIMO-capable 6G UE RF Front End design with a Carrier Aggregation capability in relation to Frequency Range 1 (F Range 1) + Frequency Range 2 (F Range 2) according to which the UE receives 4 lots of fragmented Carrier Aggregation blocks from 4 antennas in F range 2;
FIG. 9 illustrates schematically an example apparatus according to an arrangement; and
FIG. 10 illustrates schematically an example method according to an arrangement.

DETAILED DESCRIPTION

Before discussing the example embodiments in any more detail, first an overview of general operational landscape surrounding arrangements is provided.

The frequency spectrum for wireless communication systems is split into a plurality of frequency bands, for example, 5G and LTE bands. These frequency bands are typically split into a plurality of channels (also referred to as frequency blocks or carriers). Each channel may be licensed to a particular operator.

Non-Contiguous Spectrum

The 3rd Generation Partnership Project (3GPP) categorizes carrier aggregation in three different categories:

1. Intra-band contiguous spectrum: where the multiple carriers (frequency blocks or sub-blocks) are adjacent to each other in frequency and can be received with a single receiver.
2. Intra-band non-contiguous spectrum: where the multiple carriers (frequency blocks) are within the same frequency band, but not adjacent to each other. Another operator may occupy a spectrum block in between the aggregated component carriers.
3. Inter-band: where the multiple carriers aggregated belong to different frequency bands.

Intra-band carrier aggregation can be advantageous to the UE radio frequency (RF) architecture if the summed bandwidth of the adjacent carriers is within the capabilities of the receiver. In such a case, it may be possible to receive signals over all the carriers with a single receiver (Rx) branch. The component blocks of a typical receiver branch are defined as:

- Band filter: A fixed analogue RF filter that passes through a full bandwidth of one frequency band.
- LNA: A fixed-gain Low-Noise Amplifier.
- Channel filter: A configurable analogue filter that passes through the wanted carrier (i.e. spectrum block) of the band after down-conversion.
- VGA: Variable Gain Amplifier that Automatic Gain Control loop adjusts to maintain the ADC input at a wanted level suitable for the ADC output to represent the wanted signal with sufficient resolution for further digital processing.
- ADC: Analogue-to-Digital Converter.

Use of a single receiver (Rx) chain on fragmented intra-band blocks in the Downlink Carrier Aggregation (DL CA) may require implementation of approaches which can address a so-called near-far problem and unwanted emissions implications which can be associated with single receiver use.

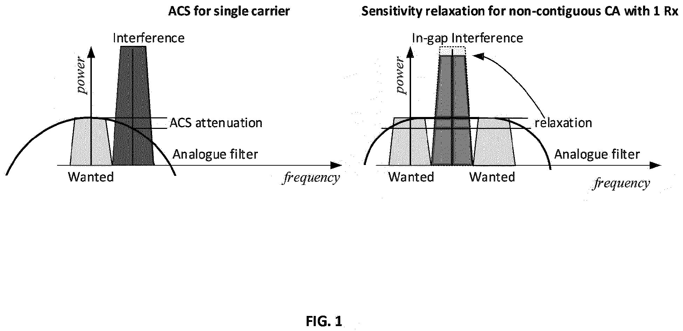

FIG. 1 illustrates graphically Adjacent Channel Selectivity (ACS). The left hand graph of FIG. 1 shows how an analogue filter can be used to attenuate interference outside a wanted frequency bandwidth. The right hand graph illustrates that if user equipment is operating in a non-contiguous spectrum regime, it is typically not possible for the UE to suppress in-gap interference between two wanted frequency blocks if the UE uses a wider analogue channel bandwidth for receiving both wanted spectrum sub-blocks (each sub-block contains one or more component carriers CCs) and use Carrier Aggregation communication techniques. In particular, any suppression a typical analogue filter could be configured to apply to "adjacent" channels (as shown in the left hand graph of FIG. 1) is no longer available. As a result, a UE may need to cope with a stronger level of what would otherwise be considered "in band" interference. Since a UE has no means to suppress the interference, a relaxation of usual signal to interference parameters required for operation in a network can be agreed for the case in which a UE is operating in a non-contiguous spectrum regime. In particular, a different, less stringent, level of signal to noise ratio is applied in relation to an in-gap interferers signal level compared to the UE signal level.

It is possible to indicate to a UE that it is being requested to use a single receive chain configuration for reception of fragmented intra-band component carriers. One example of that indication may comprise, for example, a standardized metric of relaxation of a reference sensitivity power level (REFSENS) required at the UE. In particular, it may be possible to indicate to a UE that it should (re)configure a receiver having a set of multiple and interconnected receiver chains to use a single receiver chain of the set of interconnected receiver chains and to use the single receiver chain for non-contiguous downlink carrier aggregation operation for at least two component carriers.

As described further below, the indication to a UE to operate using a single receiver chain operation for non-contiguous downlink carrier aggregation operation for at least two component carriers can also be an indicator to the UE to implement various other approaches. Those other approaches can be implemented at the UE without specific disclosure to the Network (NW) of those approaches. For example, a NW may not be made aware that a UE has been reconfigured to apply a different reception method.

The NW may only see impact from the UE implementation of other approaches as improved UE performance.

One challenge associated with use of a single Rx chain on fragmented intra-band blocks in DL CA, is that of how to minimize relaxation of Reference Sensitivity and Adjacent Channel Selectivity ACS requirements at the UE. Allowing the UE to have relaxed receiver performance in configurations where non-contiguous intra-band carrier aggregation (NC IB CA) is received by the UE using one Rx chain typically results in poor UE reception in near-far situations.

Approaches described herein seek to address whether a UE might reconfigure a receiver to perform better than the standard relaxed requirements with only one Rx chain, without requiring additional NW support for such a reconfiguration?

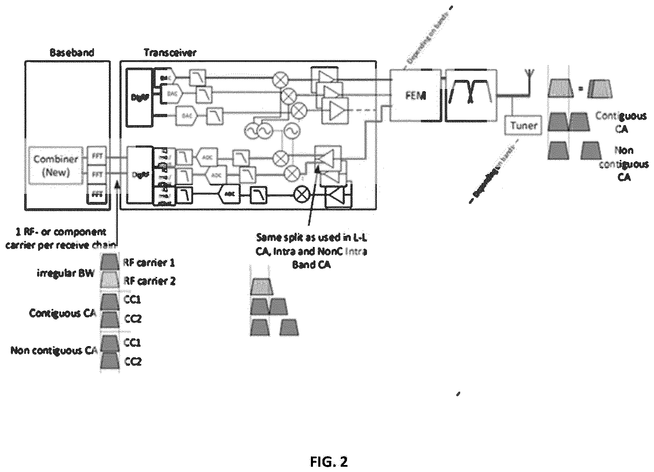

FIG. 2 illustrates schematically a UE architecture discussed in 3GPP on a matter of irregular channel bandwidths that also discussed reception of intra-band contiguous and non-contiguous carriers, which offers full bandwidth support, and in which non-contiguous carrier aggregation is supported by use of two analogue channel filters. As shown in FIG. 2, for UEs supporting 1 Rx non-contiguous CA, a traditional design approach utilizes two receiver chains including two analogue channel filters with a band width (BW) matched to a Channel bandwidth (CBW) of CC1 and CC2 respectively. According to such a design approach, a Low Noise Amplifier (LNA) or transceiver splits the signal towards two separate down-conversion paths.

An alternative, and cost saving, design approach would be to use only one Rx chain (as described above) but such a design approach requires RefSens relaxation because automatic gain control AGC implemented in relation to a receive chain would operate to target a conservative set-point to try to ensure that saturation of an analogue to digital converter ADC of the receive chain can be avoided when operating in the presence of in-gap interference.

Approaches described in more detail herein recognise that it is possible to implement a method for dynamic selection of ADC resolution in relation to UEs supporting 1 Rx non-contiguous CA. The dynamic selection of ADC resolution may operate to simultaneously target an ADC effective bit resolution and set-point to try to ensure that the ADC operates within its linear range whilst avoiding saturation. Furthermore, operation may be such that it seeks to ensure that ADC quantization noise power has a minimal effect on reference sensitivity relaxation in the presence of strong in-gap interference.

Accordingly, one general arrangement provides an apparatus comprising:

at least one processor; and
at least one memory storing instructions that when executed by the at least one processor cause the apparatus at least to perform:

determining that the apparatus is to receive signals across a frequency range using a single receiver chain, the frequency range containing at least two non-contiguous frequency blocks containing wanted signals, the at least two non-contiguous frequency blocks being separated by at least one frequency block in which unwanted signals to the apparatus may be transmitted;
determining whether a trigger condition for adjusting configuration of an analogue to digital converter in the single receiver chain has been met by: determining whether an indication of received signal strength of at least one frequency block in which unwanted signals may be transmitted has passed a threshold level at which effective decoding of received wanted signals in the non contiguous frequency blocks is compromised; and adjusting the configuration of the analogue to digital converter in the single receiver chain in response to determining the trigger condition has been met.

In other words, in some arrangements, determining the received signal strength of at least one frequency block in which unwanted signals may be transmitted has passed a selected level can be used as a trigger to change or adjust the configuration of a receiver chain ADC. The trigger or threshold level for received signal strength of unwanted signals may be selected to be a level at which effective decoding of received wanted signals in the non contiguous frequency blocks is likely to be compromised by interference caused by the unwanted signals.

In some arrangements, determining whether a trigger condition for adjusting configuration of an analogue to digital converter in the single receiver chain has been met comprises: determining that the indication of received signal strength of at least one frequency block in which unwanted signals may be transmitted exceeds a threshold level.

In some arrangements, adjusting configuration of the analogue to digital converter in the single receiver chain comprises: increasing resolution implemented by the analogue to digital converter for a selected gain setting. The gain setting implemented by Automatic Gain Control (AGC) may be determined based upon received signal strength across the frequency range. That received signal strength may be across both wanted and unwanted signals. Typically a gain setting would be selected based upon such signal strength across a frequency range and an analogue to digital converter resolution selected based upon a selected gain setting. The automatic gain setting is not typically selected with a knowledge that the received signal strength includes an "interferer" signal, and therefor that the desired or wanted signals may be received at a significantly lesser signal strength. Approaches allow for adjustment, by means of increase, of resolution of the ADC for a given gain setting, thus increasing the likelihood that wanted signals may be successfully received and decoded.

In other words, in some arrangements, adjusting configuration of the analogue to digital converter in the single receiver chain comprises increasing resolution implemented by the analogue to digital converter for a selected gain setting by increasing a number of effective bits associated with the selected gain setting.

According to some arrangements, adjusting configuration of the analogue to digital converter in the single receiver chain comprises: increasing resolution implemented by the analogue to digital converter for a selected gain setting to a maximum, or near maximum, resolution supportable by the analogue to digital converter for the selected gain setting.

In some arrangements, adjusting configuration of the analogue to digital converter in the single receiver chain comprises: increasing analogue to digital converter power consumption to increase sensitivity within a signal to noise and distortion ratio of the analogue to digital converter for the selected gain setting.

In some arrangements, as described above, the gain setting is selected based upon an indication of received signal strength across the frequency range.

In some arrangements, the indication of received signal strength across the frequency range is evaluated across the at least two non-contiguous frequency blocks containing wanted signals, and the at least one frequency block in which unwanted signals may be transmitted.

In some arrangements, determining whether a trigger condition for adjusting configuration of an analogue to digital converter in the single receiver chain has been met comprises: determining that a selected gain setting is lower than predetermined level at which effective decoding of received wanted signals in the non-contiguous frequency blocks is likely to be compromised. It will be appreciated that if a low gain setting is selected, signal strength across the frequency range may be high. Whilst that may, in some cases, be because the wanted signals are being received strongly, in some cases it may be because the unwanted signal is being received strongly. Accordingly, a low gain setting, with a high received signal strength in the unwanted region of the frequency range may be indicative of significant interference.

In some arrangements, determining whether a trigger condition for adjusting configuration of an analogue to digital converter in the single receiver chain has been met comprises:
determining that an indication has been received from a network node instructing reception of the at least two non-contiguous frequency blocks containing wanted signals using a single receiver chain.

In some arrangements, determining whether a trigger condition for adjusting configuration of an analogue to digital converter in the single receiver chain has been met comprises: determining an indication of a received signal level of signals within the frequency range.

In some arrangements, determining an indication of a received signal level of signals within the frequency range comprises:

determining an indication of signal level of unwanted signals transmitted in the at least one frequency block in which unwanted signals may be transmitted; and
determining an indication of signal level of wanted signal in at least one of the two non-contiguous frequency blocks for receiving wanted signals.

In some arrangements, determining whether a trigger condition for adjusting configuration of an analogue to digital converter in the single receiver chain has been met comprises: evaluating whether the received signal level of the unwanted signals exceeds the received signal level of the wanted signals by a predetermined threshold, and if so, adjusting configuration of the analogue to digital converter in the single receiver chain.

In some arrangements, the apparatus is further configured to: evaluate a state of charge of a battery of the apparatus, and adjusting the configuration of the analogue to digital converter in the single receiver chain in dependence upon whether the evaluated state of charge of the battery exceeds a selected value and the determination of whether the trigger condition has been met. Accordingly, if the battery level is below a selected level, no steps may be taken to increase the resolution of the ADC since it is likely to increase overall power consumption of the apparatus.

According to some arrangements, the apparatus is further configured to support reception of signals in the frequency range using MIMO reception techniques using multiple receiver chains, and for the multiple receiver chains is configured to perform the steps of:

determining whether a trigger condition for adjusting configuration of an analogue to digital converter in a receiver chain of the multiple receiver chains has been met; and
adjusting the configuration of the analogue to digital converter in the receiver chain of the multiple receiver chains in response to determining the trigger condition has been met.

In some arrangements, the steps of determining and adjusting are performed independently for each of the multiple receiver chains.

In some arrangements, the steps of determining and adjusting are performed for all of the multiple receiver chains.

In some arrangements, the apparatus comprises user equipment or a similar user device.

A further arrangement provides a method performed by user equipment, the method comprising: determining that the apparatus is to receive signals across a frequency range using a single receiver chain, the frequency range containing at least two non-contiguous frequency blocks containing wanted signals, the at least two non-contiguous frequency blocks being separated by at least one frequency block in which unwanted signals to the apparatus may be transmitted;

determining whether a trigger condition for adjusting configuration of an analogue to digital converter in the single receiver chain has been met by: determining whether an indication of received signal strength of at least one frequency block in which unwanted signals may be transmitted has passed a threshold level at which effective decoding of received wanted signals in the non-contiguous frequency blocks is compromised; and
adjusting the configuration of the analogue to digital converter in the single receiver chain in response to determining the trigger condition has been met.

In some arrangements the method comprises: adjusting configuration of the analogue to digital converter in the single receiver chain comprises: increasing resolution implemented by the analogue to digital converter for a selected gain setting.

In some arrangements the method comprises: adjusting configuration of the analogue to digital converter in the single receiver chain comprises increasing resolution implemented by the analogue to digital converter for a selected gain setting by increasing a number of effective bits associated with the selected gain setting.

In some arrangements the method comprises: adjusting configuration of the analogue to digital converter in the single receiver chain comprises: increasing resolution implemented by the analogue to digital converter for a selected gain setting to a maximum resolution supportable by the analogue to digital converter for the selected gain setting.

In some arrangements the method comprises: adjusting configuration of the analogue to digital converter in the single receiver chain comprises: increasing analogue to digital converter power consumption to increase sensitivity within a signal to noise and distortion ratio of the analogue to digital converter for the selected gain setting.

In some arrangements the gain setting is selected based upon an indication of received signal strength across the frequency range.

In some arrangements the method comprises: evaluating the indication of received signal strength across the frequency range across the at least two non-contiguous frequency blocks containing wanted signals, and the at least one frequency block in which unwanted signals may be transmitted.

In some arrangements the method comprises: determining whether a trigger condition for adjusting configuration of an analogue to digital converter in the single receiver chain has been met by: determining that the indication of received signal strength of at least one frequency block in which unwanted signals may be transmitted which exceeds a threshold level.

In some arrangements the method comprises: determining whether a trigger condition for adjusting configuration of an analogue to digital converter in the single receiver chain has been met by: determining that a selected gain setting is lower than predetermined level at which effective decoding of received wanted signals in the non-contiguous frequency blocks is likely to be compromised -

In some arrangements the method comprises: determining whether a trigger condition for adjusting configuration of an analogue to digital converter in the single receiver chain has been met by: determining that an indication has been received from a network node instructing reception of the at least two non-contiguous frequency blocks containing wanted signals using a single receiver chain.

In some arrangements the method comprises: determining whether a trigger condition for adjusting configuration of an analogue to digital converter in the single receiver chain has been met by: determining an indication of a received signal level of signals within the frequency range.

In some arrangements the method comprises: determining an indication of a received signal level of signals within the frequency range by:

> determining an indication of signal level of unwanted signals transmitted in the at least one frequency block in which unwanted signals may be transmitted; and
> determining an indication of signal level of wanted signal in at least one of the two non-contiguous frequency blocks for receiving wanted signals.

In some arrangements the method comprises: determining whether a trigger condition for adjusting configuration of an analogue to digital converter in the single receiver chain has been met by: evaluating whether the received signal level of the unwanted signals exceeds the received signal level of the wanted signals by a predetermined threshold, and if so, adjusting configuration of the analogue to digital converter in the single receiver chain.

In some arrangements the method further comprises:

> evaluating a state of charge of a battery of the apparatus, and adjusting the configuration of the analogue to digital converter in the single receiver chain in dependence upon whether the evaluated state of charge of the battery exceeds a selected value and the determination of whether the trigger condition has been met.

In some arrangements: the apparatus is further configured to support reception of signals in the frequency range using MIMO reception techniques using multiple receiver chains, and the method comprises:

> determining, for the multiple receiver chains, whether a trigger condition for adjusting configuration of an analogue to digital converter in a receiver chain of the multiple receiver chains has been met; and
> adjusting, for the multiple receiver chains, the configuration of the analogue to digital converter in the receiver chain of the multiple receiver chains in response to determining the trigger condition has been met.

In some arrangements the method further comprises performing the steps of determining and adjusting independently for each of the multiple receiver chains.

In some arrangements the method further comprises performing the steps of determining and adjusting for all of the multiple receiver chains.

A further arrangement provides a computer program comprising instructions which, when executed by an apparatus, cause the apparatus to perform at least the following: determining that an apparatus is to receive signals across a frequency range using a single receiver chain, the frequency range containing at least two non-contiguous frequency blocks containing wanted signals, the at least two non-contiguous frequency blocks being separated by at least one frequency block in which unwanted signals to the apparatus may be transmitted;

determining whether a trigger condition for adjusting configuration of an analogue to digital converter in the single receiver chain has been met by: determining whether an indication of received signal strength of at least one frequency block in which unwanted signals may be transmitted has passed a threshold level at which effective decoding of received wanted signals in the non-contiguous frequency blocks is compromised; and adjusting the configuration of the analogue to digital converter in the single receiver chain in response to determining the trigger condition has been met.

Having described an overview of general features according to approaches, more detail of such approaches is now provided below:

According to traditional receiver design, a large external blocker/interferer signal is assumed to be strongly attenuated by appropriate use of analogue channel filter (as illustrated in FIG. 1, left hand side). In relation to such a receiver design, it is relatively straightforward to select ADC resolution by reducing the effective bits resolution to match the ADC quantization noise power with tolerable margin, thereby effectively trading off power consumption for SNR desensitization within the specification requirements. That trade-off is preferred because ADC power consumption increases exponentially with bit resolution.

However, as shown in the right-hand graph of FIG. 1, supporting 1 Rx non-contiguous CA using a single wide band analogue filter which contains CC1 and CC2 in its passband, can have the result that a large interferer present within the passband can significantly affect the receiver's performance.

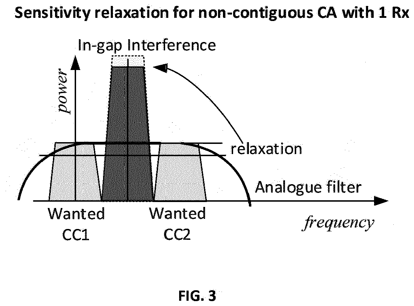

By way of example, consider two spectrum blocks CC1 and CC2 for UEs supporting 1 Rx non-contiguous CA configured as a single wide-band cell as shown graphically in FIG. 3.

For UEs supporting 1 Rx non-contiguous CA with possible in-gap Interference, two key receiver design cases can be identified related to receiver sensitivity performance:

1) **Reference sensitivity (RefSens):** The Reference sensitivity power level for e.g. a 6G receiver is defined as the minimum mean received power level for which a throughput requirement shall be met at a defined modulation scheme, typically of low complexity.

2) **Reference sensitivity relaxation:** For UEs supporting 1 Rx non-contiguous CA, reference sensitivity relaxation requirements for specific test points are possible. Such requirements address receiver selectivity in the presence of in-gap interference under conditions of ideal propagation and no added noise.

For both 1) and 2) a receiver Automatic Gain Control (AGC) will typically be configured to control an ADC set-point with an aim of ensuring that the ADC operates within its linear range and avoids saturation.

For UEs supporting 1 Rx non-contiguous CA, a traditional design approach utilizes two receiver chains with two analogue channel filters having bandwidths matched to the channel bandwidth CBW of CC1 and CC2 respectively. It is desirable to free up UE receive chains because it offers an opportunity to increase the supported CA combinations that include inter + non-contiguous intra-band combinations. It will therefore be understood that the use of separate receive chains for reception of CC1 and CC2, as in the traditional design approach, may be undesirable.

According to 3GPP TS 38.101-1, the reference sensitivity power level for a 5G NR receiver is defined as the minimum mean received power level for which a throughput requirement shall be met. The throughput requirement is typically defined in terms of a Block Error Rate (BLER) of less than or equal to 10% for a specific modulation and coding scheme.

The reference sensitivity level $P_ref$ can be calculated as follows:

$$P\_ref \ = kTB \ + \ NF \ + \ SNR\_min \qquad\qquad (1)$$

where:

- k is Boltzmann's constant (1.38 x 10^-23 J/K),
- T is the temperature in Kelvin,
- B is the bandwidth in Hz,
- NF is the noise figure of the receiver,

- *SNR_min* is the minimum required signal-to-noise ratio for the specific modulation and coding scheme.

In 5G the REFSENS has a few more aspects, as captured in 38.817:
For below 6GHz, the REFSENS level can be calculated by the equation below:

$$\text{Sensitivity} = -174\text{dBm}(kT) + 10 * \log(\text{RX BW}) + \text{NF} + \text{SNR} + \text{IM} - \text{diversity gain}\ (2)$$

The SNR defines the target for the demodulator performance, which links to the signal modulation properties of the downlink reference signal.
In a given receive chain, the Analogue to Digital Converter ADC bit resolution affects the quantization noise and thus the overall SNR.
The SNR for an ADC can be represented as:

$$SNR_{ADC} = 6.02N + 1.76\ dB \tag{3}$$

where N is the effective ADC bit resolution.
In other words, the higher the bit resolution of the ADC, the greater the contribution of the ADC to the SNR.
Considering only the ADC, the minimum signal level can be defined (similar to equation (1)) as:

$$P_{min_{ADC}} = kTB + P_{QN} \tag{4}$$

where
$P_{QN}$ is the quantization noise level of the ADC determined from $P_{fullscale}$ and the effective number of bits of the ADC.
The dynamic range, DR, of an ADC is defined as the difference between the maximum input level that the ADC can handle without distortion, $P_{fullscale}$, and the quantization noise level, $P_{QN}$.
Dynamic Range can be calculated as follows:

$$DR = P_{fullscale} - P_{QN} \tag{5}$$

The ADC set-point is the input power level at which the ADC operates. ADC set-point is typically set to a level that ensures the ADC operates within its linear range above the quantization noise whilst avoiding saturation.
The set-point can be represented as:

$$P_{fullscale} - M \tag{6}$$

where M is the margin to avoid ADC saturation.

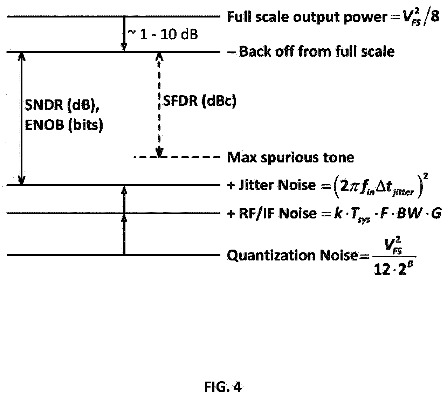

FIG. 4 illustrates schematically typical ADC implementation design requirements. M is the back off from full scale, which is selected based on a particular application.
By way of overview, because automatic gain control AGC utilizes measured average Received Signal Strength Indicator (RSSI) for control of the ADC set-point, the presence of a high-power in-gap interference for UEs supporting 1 Rx non-contiguous CA, will conventionally result in a low AGC gain setting in order to avoid ADC saturation.
With reference to FIG. 4, the AGC operates to ensure effective utilization in the ADC of the available signal-to-noise-and-distortion ratio (SNDR). Spurious (interference) free dynamic range (SFDR) is determined within the SNDR, meaning that an interference with a higher input power than the wanted signal effectively determines the margin towards the quantization noise.
Since the AGC has, as part of its purpose, maintenance of an input signal (including noise and interference) within the SNDR, backed off from the full scale by an implementation specific parameter, M, it is understood that tracking a strong interferer within the AGC loop will force a wanted signal towards the noise floor with poor effective number of bits (ENOB).
The ADC power consumption increases exponentially with bit resolution, a UE has a receiver design that is traditionally configured to select ADC resolution by reducing or always configuring an effective bits resolution to match an ADC quantization noise power with tolerable margin to the SNR requirement of a reference input signal as indicated in equation (5).
The ADC resolution is configured so that the $P_{QN}$ is less than the noise in the RF/IF.
Approaches described in more detail below recognize that a UE receiver design which includes a capability to configure ADC resolution (ENOB) but has implemented fixed resolution for optimum current consumption towards the SNR requirement rather than for the purpose of altering the ADC characteristics of the SNDR.

In the case where strong in-gap interference is present for UEs supporting 1 Rx non-contiguous CA, a high RSSI will be measured, and traditional receiver design will select:

1) Low AGC gain to ensure a set-point that avoids ADC saturation.
2) Low ADC bit resolution to match an ADC quantization noise power with tolerable margin to the minimum required SNR for the specific modulation and coding scheme.

As described above, some network implementations in such a case would lead to new reference sensitivity relaxation requirements for fragmented carriers. Approaches recognize that fragmented carrier operation could result in a UE implementing a different approach to AGC, because the traditional approach leads to the ADC quantization noise dominating the $SNR_{min}$, and the minimum required signal-to-noise ratio for the specific modulation and coding scheme defining the reference sensitivity level, $P_{ref}$.

By way of example, various possible UE-based implementations of the general approach alluded to above are described in detail:

**Approach 1: Dynamic ADC bit resolution selection**

Case 1: High RSSI, Higher In-gap interference level than wanted signal level

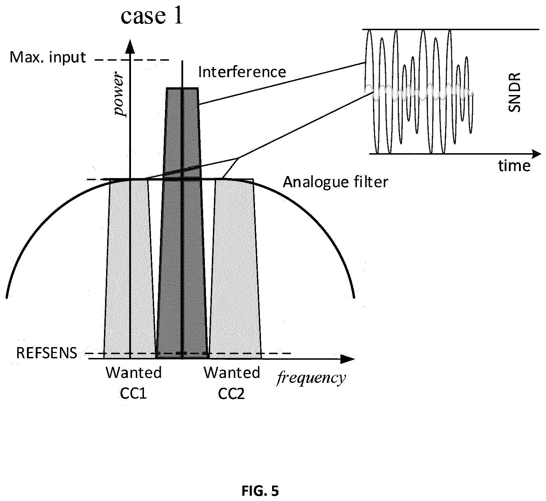

FIG. 5 illustrates schematically received signal levels at a UE in a fragmented carrier scenario in which an in-gap interferer is received at a higher power level than the wanted component carriers CC1 and CC2. The inset of FIG. 5 shows the signal to noise and distortion ratio (SNDR) of such a scenario.

In such a case, in accordance with described approaches, the AGC is configured to implement a low gain and the ADC is configured to be set to an increased, for example, maximum, bit resolution. Such a configuration can mitigate or minimize the effect of ADC quantization noise power. Such an approach contrasts with a traditional implementation in which bit resolution is linked to the signal modulation type and bandwidth.

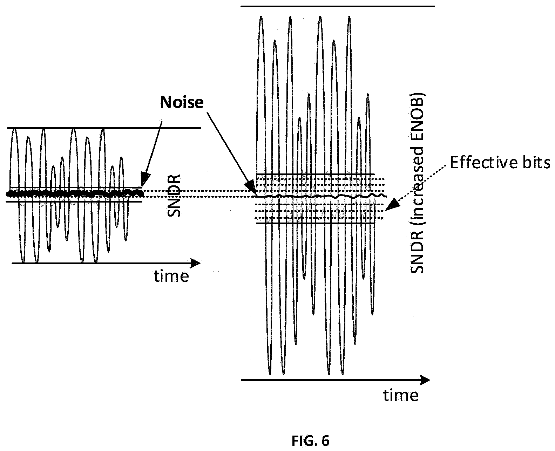

FIG. 6 illustrates graphically how a UE configuration in accordance with arrangements can result in an effective increase of an effective number of bits and allow a UE to extract more successfully the wanted signal from all received signals.

In some arrangements, a UE may be configured to implement one or more triggers for operation in accordance with described approaches. For example, a UE may update an approach to ADC resolution based on configuration information received from a network. That configuration information may indicate to the UE that the network would like the UE to operate using a configuration in which 1 Rx chain is used in relation to fragmented carriers. In an alternative implementation, a UE can update ADC operation when it detects that, for example, the Reference Signal Receiver Power (RSRP) starts to deteriorate under good signal conditions, which can happen when an in-gap interferer becomes strong (near-far issue) in a fragmented or non-contiguous carrier aggregation CA configuration.

Upon detecting receipt of the configuration information, or on detection of an indication that the in-gap interference is stronger than the received wanted signal(s), or a combination of both, a UE may operate to reconfigure ADC resolution. As a result of such reconfiguration, the UE may benefit from an increased signal to noise and distortion ratio SNDR which can allow the UE sufficient resolution to track a wanted signal even if the AGC tracks the Received Signal Strength Indicator RSSI which includes the in-gap interference.

Such an approach can mitigate, minimize, or, in some cases, even eliminate, a need for reference sensitivity relaxation requirements outlined in relation to fragmented carrier operation.

Case 2: High RSSI, Lower In-gap interference level than wanted signal level

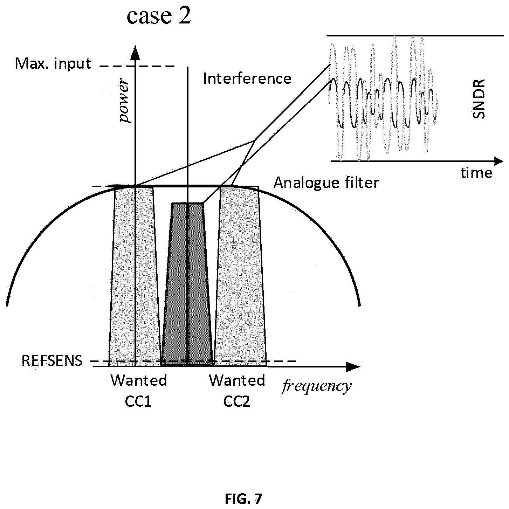

FIG. 7 illustrates schematically received signal levels at a UE in a fragmented carrier scenario in which an in-gap interferer is received at a lower power level than the wanted component carriers CC1 and CC2. The inset of FIG. 7 shows the signal to noise and distortion ratio (SNDR) of such a scenario.

In such a case the AGC also operates to implement low gain, but approaches may be such that if the CC1+CC2 level is determined to be high, the ADC effective bits resolution can be reduced to match a quantization noise power with tolerable margin, thereby effectively trading off power consumption for SNR desensitization between case 1 and 2 (within the RefSens specification requirements).

In this case of wanted signal being greater than in-gap interferer, a UE may use a determination of the in-gap interference power compared to the wanted signal power to trigger a switch of ADC resolution.

**MIMO ADC bit resolution**

For optimal MIMO design, the ADC bit resolution and set-point for each receive path should be considered. In the following discussion, only rank 1 is considered.

The total quantization noise power for a MIMO system can be represented as:

$$Q_{total} = \sum_{i=1}^{N} Q_i \tag{6}$$

where $Q_i$ is the quantization noise power for the $i^{th}$ receive path.

The total $SNR_{ADC}$ for the MIMO system can then be represented as:

$$SNR_{ADC_{total}} = \frac{P_{rx}}{Q_{total}} \tag{7}$$

In the case of the presence of strong in-gap interference for a UE supporting 1 Rx non-contiguous CA, a traditional MIMO receiver design is configured to select for each MIMO path with high measured RSSI levels:

1) Low AGC gain to ensure a set-point that avoids ADC saturation.
2) Low ADC bit resolution to match an ADC quantization noise power with tolerable margin to the minimum required SNR for the specific modulation and coding scheme.

Because the AGC utilizes estimated RSSI for controlling the set-point of the ADC for each MIMO path, just like the non-MIMO case described above, fragmented carrier operation will typically lead to new MIMO reference sensitivity relaxation requirements. In particular, the presence of strong in-gap interference for UEs supporting 1 Rx non-contiguous CA will result in Low AGC gain and low ADC bit resolution if the AGC control of the individual MIMO paths detects high RSSI.

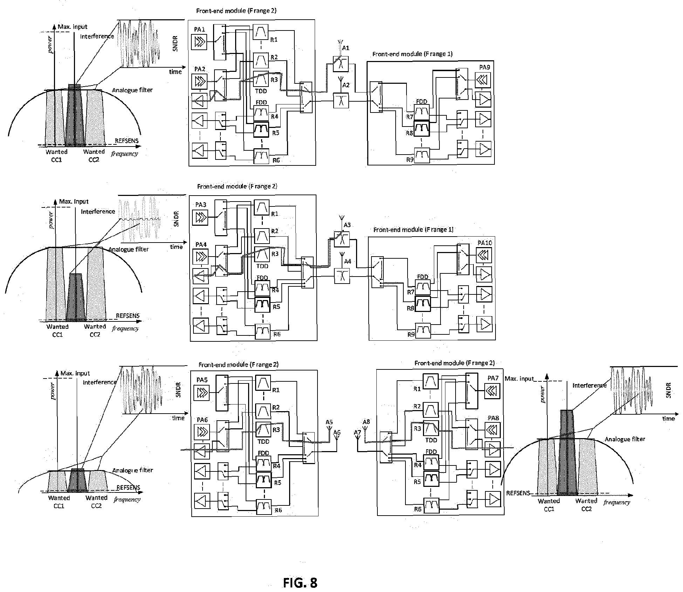

Example RF systems aspects of a MIMO system are shown in FIG. 8.

FIG. 8 shows schematically a 4x4 MIMO-capable 6G UE RF Front End design with a Carrier Aggregation capability in relation to Frequency Range 1 (F Range 1) + Frequency Range 2 (F Range 2) according to which the UE receives 4 lots of fragmented Carrier Aggregation blocks from 4 antennas in F range 2.

It will be appreciated, based on the above discussion, that dynamic ADC bit resolution approaches described in relation to a single receive chain described above are also applicable to each receive chain during MIMO operation of a UE.

**Approach 2: MIMO Dynamic ADC bit resolution selection**

In an example implementation a UE receiver may be configured to dynamically determine the ADC effective bit resolution for each MIMO path as described in the non-MIMO case.

Hence, individual MIMO path AGCs may have different gains, and the ADCs can be set to an increased, or maximum, bit resolution to minimize the effect of ADC quantization noise power of the wanted signal after removal of the in-gap interference signal at baseband for each MIMO path.

Setting all MIMO paths to maximum bit resolution may support optimum compliance with a strong in-gap interferer, but at the same time is the most power consuming solution.

Accordingly, implementations may be such that a UE may can choose to select a maximum available ADC bit resolution for all MIMO paths, but alternatively may chose to reduce the effective bits resolution from a maximum to match ADC quantization noise power with tolerable margin for each MIMO path, thereby effectively trading off power consumption for SNR desensitization within the specification requirements. Such an implementation can offer an advantage of a lower overall power consumption compared to an implementation in which a highest possible ENOB is implemented on all MIMO branches. Such an implementation does, of course, involve more reconfiguration of ADCs. It will be appreciated that implementations may mitigate, minimize or, in some cases, eliminate a need for reference sensitivity relaxation requirements in case of MIMO operation of a UE for fragmented carrier MIMO.

**Approach 3: Battery life dependency of method**

In some implementations, a UE may include a battery level measurement as a parameter which can be taken into consideration when determining whether, or how, to implement a method in accordance with described approaches. Such implementations may prevent a UE from implementing a higher ENOB with a resultant increase in consumed battery power. By way of example, a UE may be configured to assess battery power level and, if a minimum threshold available power is not available, a method in accordance with described approaches can be disabled at low battery levels. In such an implementation, the UE is then reliant on specification relaxation requirements (RefSens relaxation) to perform at much less tolerated in-gap interference levels.

Summary of features of some possible Implementations

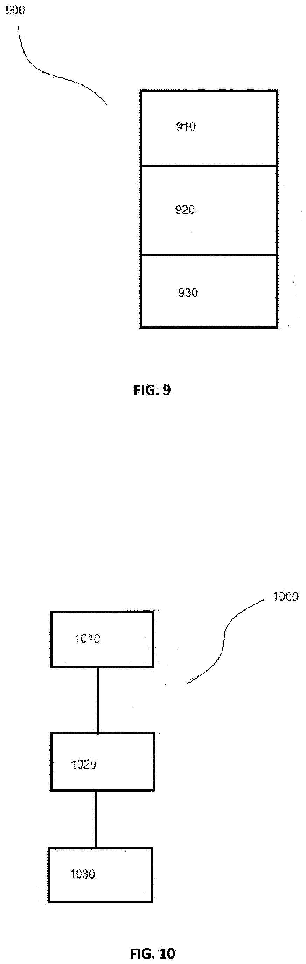

FIG. 9 illustrates schematically an example apparatus according to an arrangement. FIG. 9 illustrates schematically an apparatus 900, for example, a UE, comprising:

910: circuitry configured to determine that the apparatus is to receive signals across a frequency range using a single receiver chain, the frequency range containing at least two non-contiguous frequency blocks containing wanted signals, the at least two non-contiguous frequency blocks being separated by at least one frequency block in which unwanted signals to the apparatus may be transmitted;

920: circuitry configured to determine whether a trigger condition for adjusting configuration of an analogue to digital converter in the single receiver chain has been met by: determining whether an indication of received signal strength of at least one frequency block in which unwanted signals may be transmitted has passed a threshold level at which effective decoding of received wanted signals in the non-contiguous frequency blocks is compromised; and

930: circuitry configured to adjust the configuration of the analogue to digital converter in the single receiver chain in response to determining the trigger condition has been met.

FIG. 10 illustrates schematically an example method according to an arrangement.

According to the example shown in FIG. 10 a method performed by user equipment such as user equipment 900 in FIG. 9, the method 1000 in accordance with an arrangement comprising steps of:

1010: determining that the apparatus is to receive signals across a frequency range using a single receiver chain, the frequency range containing at least two non-contiguous frequency blocks containing wanted signals, the at least two non-contiguous frequency blocks being separated by at least one frequency block in which unwanted signals to the apparatus may be transmitted;

1020: determining whether a trigger condition for adjusting configuration of an analogue to digital converter in the single receiver chain has been met by: determining whether an indication of received signal strength of at least one frequency block in which unwanted signals may be transmitted has passed a threshold level at which effective decoding of received wanted signals in the non-contiguous frequency blocks is compromised; and

1030: adjusting the configuration of the analogue to digital converter in the single receiver chain in response to determining the trigger condition has been met.

In general, approaches operate such that a UE in a fragmented carrier reception mode can minimize the RefSens requirement relaxation by changing the effective number of bits implemented in receive chain ADCs to handle a reception scenario in which there is a large in-gap interferer and potential weak wanted signals.

Implementations vary, and can be triggered of based on, for example, a received indication that fragmented CA configuration is to be used by the UE. Alternatively, the ADC adjustment in accordance with approaches can be triggered by an interference power level measured by the UE. Implementations operate to change the ENOB on UE receive chain ADC. In some implementations, a UE may be configured to change the ENOB on a receive chain ADC on a individual basis across MIMO branches. Implementations of described approaches may depend upon receipt at a UE of an appropriate trigger. The trigger may be determined by the UE itself, or may relate to an indication received by the UE from the network. The trigger may be related to available power levels at the UE. Implementation of described approaches may result in improved UE performance in relation to fragmented CA operation compared to standard specification requirements (3GPP and other standardizations). Approaches may be applicable to any radio system that can be configured to operate with fragmented spectrum while required to receive with a single receive chain (including implementation based on one or more receive chains of MIMO operation). Implementation of approaches may depend, in some cases, on an assessment of UE battery level.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all the steps of said above-described methods. The program storage devices may be, e.g., digital memories, magnetic storage media such as a magnetic disks and magnetic tapes, hard drives, or optically readable digital data storage media.

The embodiments are also intended to cover computers programmed to perform said steps of the above-described methods. The tern non-transitory as used herein, is a limitation of the medium itself (i.e., tangible, not a signal) as opposed to a limitation on data storage persistency (e.g. RAM vs ROM).

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The ordering of method steps set out above may not be critical or fixed and the exact ordering of the steps may be varied as appropriate.

Although example embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

**Claims**

1. An apparatus comprising:

at least one processor; and
at least one memory storing instructions that when executed by the at least one processor cause the apparatus at least to perform:

determining that the apparatus is to receive signals across a frequency range using a single receiver chain, the frequency range containing at least two non-contiguous frequency blocks containing wanted signals, the at least two non-contiguous frequency blocks being separated by at least one frequency block in which unwanted signals to the apparatus may be transmitted;

determining whether a trigger condition for adjusting configuration of an analogue to digital converter in the single receiver chain has been met by: determining whether an indication of received signal strength of at least one frequency block in which unwanted signals may be transmitted has passed a threshold level at which effective decoding of received wanted signals in the non-contiguous frequency blocks is compromised; and

adjusting the configuration of the analogue to digital converter in the single receiver chain in response to determining the trigger condition has been met.

2. An apparatus according to claim 1, wherein adjusting configuration of the analogue to digital converter in the single receiver chain comprises: increasing resolution implemented by the analogue to digital converter for a selected gain setting.

3. An apparatus according to claim 1 or claim 2, wherein adjusting configuration of the analogue to digital converter in the single receiver chain comprises: increasing resolution implemented by the analogue to digital converter for a selected gain setting to a maximum resolution supportable by the analogue to digital converter for the selected gain setting.

4. An apparatus according to any preceding claim, wherein adjusting configuration of the analogue to digital converter in the single receiver chain comprises: increasing analogue to digital converter power consumption to increase sensitivity within a signal to noise and distortion ratio of the analogue to digital converter for the selected gain setting.

5. An apparatus according to any one of claims 2 to 4, wherein the gain setting is selected based upon an indication of received signal strength across the frequency range.

6. An apparatus according to claim 5, wherein the indication of received signal strength across the frequency range is evaluated across the at least two non-contiguous frequency blocks containing wanted signals, and the at least one frequency block in which unwanted signals may be transmitted.

7. An apparatus according to any preceding claim, wherein determining whether a trigger condition for adjusting configuration of an analogue to digital converter in the single receiver chain has been met comprises: determining that a selected gain setting is lower than predetermined level at which effective decoding of received wanted signals in the non-contiguous frequency blocks is likely to be compromised.

8. An apparatus according to any preceding claim, wherein determining whether a trigger condition for adjusting configuration of an analogue to digital converter in the single receiver chain has been met comprises: determining that an indication has been received from a network node instructing reception of the at least two non-contiguous frequency blocks containing wanted signals using a single receiver chain.

9. An apparatus according to any preceding claim, wherein determining whether a trigger condition for adjusting configuration of an analogue to digital converter in the single receiver chain has been met comprises: determining an indication of a received signal level of signals within the frequency range.

10. An apparatus according to claim 9, wherein determining an indication of a received signal level of signals within the frequency range comprises:

determining an indication of signal level of unwanted signals transmitted in the at least one frequency block in which unwanted signals may be transmitted; and

determining an indication of signal level of wanted signal in at least one of the two non-contiguous frequency blocks for receiving wanted signals.

11. An apparatus according to any preceding claim, wherein determining whether a trigger condition for adjusting configuration of an analogue to digital converter in the single receiver chain has been met comprises: evaluating whether the received signal level of the unwanted signals exceeds the received signal level of the wanted signals by a predetermined threshold, and if so, adjusting configuration of the analogue to digital converter in the single receiver chain.

12. An apparatus according to any preceding claim, wherein the apparatus is further configured to: evaluate a state of charge of a battery of the apparatus, and adjusting the configuration of the analogue to digital converter in the single receiver chain in dependence upon whether the evaluated state of charge of the battery exceeds a selected value and the determination of whether the trigger condition has been met.

13. An apparatus according to any preceding claim, wherein the apparatus is further configured to support reception of signals in the frequency range using MIMO reception techniques using multiple receiver chains, and for the multiple receiver chains is configured to perform the steps of:

> determining whether a trigger condition for adjusting configuration of an analogue to digital converter in a receiver chain of the multiple receiver chains has been met; and
> adjusting the configuration of the analogue to digital converter in the receiver chain of the multiple receiver chains in response to determining the trigger condition has been met.

14. A method performed by user equipment, the method comprising:

> determining that the apparatus is to receive signals across a frequency range using a single receiver chain, the frequency range containing at least two non-contiguous frequency blocks containing wanted signals, the at least two non-contiguous frequency blocks being separated by at least one frequency block in which unwanted signals to the apparatus may be transmitted;
> determining whether a trigger condition for adjusting configuration of an analogue to digital converter in the single receiver chain has been met by: determining whether an indication of received signal strength of at least one frequency block in which unwanted signals may be transmitted has passed a threshold level at which effective decoding of received wanted signals in the non-contiguous frequency blocks is compromised; and
> adjusting the configuration of the analogue to digital converter in the single receiver chain in response to determining the trigger condition has been met.

15. A computer program comprising instructions which, when executed by an apparatus, cause the apparatus to perform at least the following:

> determining that an apparatus is to receive signals across a frequency range using a single receiver chain, the frequency range containing at least two non-contiguous frequency blocks containing wanted signals, the at least two non-contiguous frequency blocks being separated by at least one frequency block in which unwanted signals to the apparatus may be transmitted;
> determining whether a trigger condition for adjusting configuration of an analogue to digital converter in the single receiver chain has been met by: determining whether an indication of received signal strength of at least one frequency block in which unwanted signals may be transmitted has passed a threshold level at which effective decoding of received wanted signals in the non-contiguous frequency blocks is compromised; and
> adjusting the configuration of the analogue to digital converter in the single receiver chain in response to determining the trigger condition has been met.

**ACS for single carrier**

Interference

power

ACS attenuation

Analogue filter

Wanted

frequency

**Sensitivity relaxation for non-contiguous CA with 1 Rx**

In-gap Interference

power

relaxation

Analogue filter

Wanted          Wanted

frequency

FIG. 1

FIG. 2

Sensitivity relaxation for non-contiguous CA with 1 Rx

FIG. 3

FIG. 4

FIG. 5

**FIG. 6**

case 2

Max. input

power

Interference

SNDR

Analogue filter

time

REFSENS

Wanted
CC1

Wanted
CC2

frequency

FIG. 7

FIG. 8

900

```
┌─────────────┐
│             │
│     910     │
│             │
├─────────────┤
│             │
│     920     │
│             │
├─────────────┤
│             │
│     930     │
│             │
└─────────────┘
```

**FIG. 9**

1000

```
┌───────────┐
│           │
│   1010    │
│           │
└─────┬─────┘
      │
┌─────┴─────┐
│           │
│   1020    │
│           │
└─────┬─────┘
      │
┌─────┴─────┐
│           │
│   1030    │
│           │
└───────────┘
```

**FIG. 10**

**EUROPEAN SEARCH REPORT**

Application Number

**EP 24 18 5392**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 105 610 453 B (GUANGZHOU HUIZHISITONG INFORMATION TECH CO LTD) 7 December 2018 (2018-12-07) * paragraphs [0028] - [0035]; figure 1 * ----- | 1-15 | INV. H04B1/10 |
| A | US 11 621 737 B2 (ROCKWELL COLLINS INC [US]) 4 April 2023 (2023-04-04) * column 3, line 56 - column 4, line 21; figure 4 * ----- | 1-15 | |
| A | US 2007/201570 A1 (OKADA KUNIO [JP]) 30 August 2007 (2007-08-30) * paragraphs [0040] - [0045]; figure 1 * ----- | 1-15 | |

TECHNICAL FIELDS
SEARCHED    (IPC)

H04B

The present search report has been drawn up for all claims

| Place of search | Date of completion of the search | Examiner |
|---|---|---|
| Munich | 23 December 2024 | Ciccarese, Corrado |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 5392

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2024

| Patent document cited in search report | | Publication date | Patent family member(s) | | Publication date |
|---|---|---|---|---|---|
| CN 105610453 | B | 07-12-2018 | NONE | | |
| US 11621737 | B2 | 04-04-2023 | NONE | | |
| US 2007201570 | A1 | 30-08-2007 | JP | 4802763 B2 | 26-10-2011 |
| | | | JP | 2007235296 A | 13-09-2007 |
| | | | US | 2007201570 A1 | 30-08-2007 |

EPO FORM P0459

For more details about this annex : see Official Journal of the European Patent Office, No. 12/82